# EUROPÄISCHE PATENTANMELDUNG

(11) **EP 1 852 978 A2**
(43) Veröffentlichungstag der Anmeldung: **07.11.2007**
(21) Anmeldenummer: 07008932.1
(22) Anmeldetag: 03.05.2007
(51) Int. Cl.: H04B 1/18

(54) **Anordnung zur Übertragung von Signalen über eine Antennenzuleitung in einer Mobilfunkteilnehmerstation**

(30) Priorität: 04.05.2006 DE 102006021514
(71) Anmelder: Funkwerk Dabendorf GmbH, 15806 Dabendorf (DE)
(72) Erfinder: Nast, Helmut, 12557 Berlin (DE)
(74) Vertreter: Patentanwälte Bressel und Partner

(57) **Zusammenfassung**

Die Erfindung betrifft eine Anordnung zur Übertragung von Signalen über eine Antennenzuleitung in einer Mobilfunk-Teilnehmerstation, insbesondere in einem Fahrzeug, wie beispielsweise einem Straßen-Kraftfahrzeug, wobei die Anordnung eine Antennenzuleitung und einen Signalverstärker zur Verstärkung der Signale aufweist. Es wird vorgeschlagen die Gesamt-Verstärkung der Signale, die zwischen einer Außenantenne der Mobilfunk-Teilnehmerstation und einem Mobilfunk-Teilnehmergerät (95) und/oder umgekehrt übertragen werden, abhängig von einer Anschlussdämpfung einzustellen, die ein Anschluss des Mobilfunk-Teilnehmergeräts (95) an der Antennenzuleitung (Stelleinrichtung 37, 73). Der Anschluss kann Insbesondere drahtlos über einen Antennenkoppler (93) erfolgen, der in einem elektromagnetisch abschirmenden Gehäuse zur Aufnahme des Teilnehmergeräts angeordnet ist.

## Beschreibung

Die Erfindung betrifft eine Anordnung zur Übertragung von Signalen über eine Antennenzuleitung in einer Mobilfunk-Tellnehmerstation, insbesondere in einem Fahrzeug, wie beispielsweise einem Straßen-Kraftfahrzeug.

Es sind bereits zahlreiche Halter bekannt, mit denen ein Mobiltelefon Innerhalb eines Kraftfahrzeugs an einem gewünschten Ort gehalten werden kann. Meist sind in den Haltern Anschlüsse zum elektrischen Anschließen des Mobiltelefons an eine Freisprechanlage und/oder an eine Antenne des Kraftfahrzeugs integriert. Es ist jedoch auch bekannt, dass das Mobiltelefon über eine Bluetooth-Funkschnittstelle mit der in dem Kraftfahrzeug verbauten Freisprechanlage verbunden werden kann.

Die Halter sind jedoch in der Regel nur für eine bestimmte Bauform von Mobiltelefonen geeignet. Wenn ein anderer Typ von Mobiltelefonen gehaltert werden soll, ist in der Regel ein neuer Halter oder zumindest ein neuer Adapter erforderlich.

Die Gesamt-Dämpfung der Signale, die über die Antennenzuleltung übertragen werden, ist abhängig von der Art des Halters und der Art des Anschlusses des Mobiltelefons an die Außenantenne des Kraftfahrzeugs. Beispielsweise gibt es Mobiltelefone mit einem elektrischen Anschluss, über den das Mobiltelefon mit der Antennenzuleitung verbunden werden kann. In diesem Fall ist die Anschlussdämpfung (d. h. die Dämpfung, die durch den Anschluss des Mobiltelefons an die Antennenzuleitung entsteht) gering. Es gibt jedoch auch Mobiltelefone ohne einen solchen Antennenanschluss. In diesem Fall kann das Mobiltelefon über einen Antennenkoppler an die Antennenzuleitung angeschlossen werden. Beispielsweise resultiert daraus eine Anschlussdämpfung in der Größenordnung von 6 dB.

Es ist eine Aufgabe der vorliegenden Erfindung, eine Anordnung anzugeben, die für den Anschluss einer Vielzahl von unterschiedlichen Mobiltelefontypen und/oder den Anschluss gemäß unterschiedlicher Anschlussarten geeignet ist.

Unter einem Mobiltelefon wird jegliche Art von Endgeräten verstanden, die in einem Mobilfunknetz betrieben werden kann. Das Mobiltelefon muss insbesondere nicht sowohl Signale senden und als auch empfangen können.

Vorzugsweise soll die Mobilfunk-Teilnehmerstation, insbesondere der Innenraum des Fahrzeugs, gegen Funksignale abgeschirmt werden, die das Mobiltelefon aussendet.

Hierzu kann ein elektromagnetisch abschirmendes Gehäuse vorgesehen sein, welches beispielsweise fest im Innenraum des Kraftfahrzeugs verbaut ist. In dem Gehäuse kann ein elektrischer Anschluss zum Anschließen des Mobiltelefons an die Antennenzuleitung vorgesehen sein. Vorzugsweise ist jedoch ein Antennenkoppler vorgesehen, über den das Mobiltelefon ohne elektrische Leitung an die Antennenzuleitung angeschlossen werden kann. Das Gehäuse kann Mobiltelefone mit unterschiedlichen Außenabmessungen aufnehmen. Hierdurch sind die Handhabung des Mobiltelefons beim Anschließen an die Antennenzuleitung wesentlich erleichtert und es können von demselben Gehäuse verschiedene Mobiltelefon-Typen aufgenommen werden.

Insbesondere kann der Anschluss an die Antennenzuleitung auch indirekt, über eine Funkschnittstelle erfolgen, die nicht der Übertragung der Antennensignale dient, welche bei unmittelbarem Betrieb des Mobiltelefons in dem Mobilfunknetz von dem Mobiltelefon gesendet werden. Eine solche Funkschnittstelle entspricht beispielsweise dem Bluetooth-Standard. Über die Funkschnittstelle kann das Mobiltelefon beispielsweise an eine Freisprechanlage angeschlossen sein, die für den Betrieb an dem Mobilfunknetz die Funktion des Endgeräts übernimmt. Z. B. werden nach dem Anschluss des Mobiltelefons die für diesen Betrieb erforderlichen Informationen aus dem Mobiltelefon in die Freisprechanlage übernommen, insbesondere Daten der SIM-Karte.

Unter elektromagnetisch abschirmend wird in dieser Beschreibung verstanden, dass elektromagnetische Wellen, die durch Gehäuseteile hindurchtreten möchten, in ihrer Amplitude signifikant gedämpft werden. In besonderer Ausgestaltung ist die elektromagnetische Abschirmung speziell für ein oder mehrere der Frequenzbänder ausgelegt, in denen Mobiltelefone ihre Funksignale senden und/oder empfangen. Dabei kann es sich um die Frequenzbänder handeln, die innerhalb eines Mobiltelefonnetzes genutzt werden, und/oder um die Frequenzbänder für eine zusätzliche Funkschnittstelle, beispielsweise nach dem Bluetooth-Standard.

Gemäß einem weiteren Aspekt der Erfindung ist zumindest ein Signalverstärker zur Verstärkung der Signale vorgesehen, die über die Antennenzuleitung in der Mobilfunk-Teilnehmerstation übertragen werden. Auf diese Weise können aufgrund der Dämpfung, insbesondere der Anschiussdämpfung, reduzierte Signalpegel angehoben (verstärkt) werden. Dabei kann der Signalverstärker grundsätzlich an beliebiger Stelle der Antennenzuleitung angeordnet sein. Beispielsweise kann ein erster Signalverstärker zur Verstärkung der von der Mobilfunk-Teilnehmerstation zu sendenden Signale in der Nähe des Mobiltelefons angeordnet sein, so dass die von ihm verstärkten Signale zumindest Über den überwiegenden Teil der Antennenzuleitung bis zur Antenne der Teilnehmerstation übertragen werden (und dabei wiederum gedämpft werden können). Falls ein elektromagnetisch abschirmendes Gehäuse zur Aufnahme des Mobiltelefons vorgesehen ist, ist der erste Signalverstärker vorzugsweise in oder an dem Gehäuse angeordnet. Insbesondere können das Gehäuse und der erste Signalverstärker eine bautechnische Einheit sein, d.h. mechanisch miteinander verbunden sein.

Ferner kann ein zweiter Signalverstärker vorgesehen sein, der das von der Antenne der Teilnehmerstation empfangene Signal verstärkt, so dass die verstärkten Signale über die Antennenzuleitung oder zumindest über einen wesentlichen Teil davon zu dem Mobiltelefon übertragen werden können.

Wenn in dieser Beschreibung von einer Übertragung der Signale über die Antennenzuleitung zu dem Mobiltelefon die Rede ist, so wird darunter auch der Fall verstanden, dass das Mobiltelefon zwar an Einrichtungen der Mobilfunk-Teilnehmerstation angeschlossen ist, diese Einrichtungen (wie beispielsweise eine Freisprechanlage) aber wesentliche Funktionen für den Betrieb an dem Mobilfunknetz von dem Mobiltelefon übernommen haben.

Gemäß einer besonders bevorzugten Ausgestaltung der Erfindung ist eine Stelleinrichtung zur Einstellung einer Gesamt-Verstärkung der Signale vorgesehen, die zwischen einer Außenantenne der Mobilfunk-Teilnehmerstation und einem Mobilfunk-Teilnehmergerät (dem Mobiltelefon) und/oder umgekehrt übertragen werden. Die Stelleinrichtung ist ausgestaltet, die Gesamt-Verstärkung abhängig von einer Anschlussdämpfung einzustellen, die ein Anschluss des Mobilfunk-Teilnehmergerätes an der Antennenzuleitung erzeugt.

Dem liegt das oben geschilderte Problem zugrunde, wonach verschiedene Mobiltelefone auf unterschiedliche Arten an die Antennenzuleitung angeschlossen werden können, wobei unterschiedliche Anschlussdämpfungen entstehen können.

Die Stelleinrichtung kann auf den oder die Signalverstärker wirken und unmittelbar die Verstärkung einstellen. In bevorzugter Ausgestaltung weist die Stelleinrichtung jedoch alternativ oder zusätzlich eine einstellbare Dämpfungseinrichtung auf, die derart mit der Antennenzuleitung gekoppelt ist, dass über die Antennenzuleitung übertragene Signale entsprechend einer eingestellten Dämpfung gedämpft werden, d.h. insbesondere der Signalpegel reduziert wird.

Beispielsweise wird die Verstärkung des oder der Signalverstärker so gewählt, dass sie auch für den Fall ausreichend ist, in dem die größtmögliche Anschlussdämpfung auftritt. Durch Einstellung der durch die Dämpfungseinrichtung bewirkten Dämpfung kann dann der Signalpegel auf einen gewünschten Wert eingestellt werden oder in einem gewünschten Wertebereich erhalten werden. Auch die Einstellung der Dämpfung Null ist möglich.

Gemäß einem weiteren Gedanken der Erfindung kann eine Detektionseinrichtung vorgesehen sein, die mit der Antennenzuleitung verbunden ist und die ausgestaltet ist, über die Antennenzuleitung übertragene Signale auszuwerten und einen Einstellwert zu detektieren, auf welchen die Stelleinrichtung einzustellen ist. Dies ermöglicht es, die über die Antennenzuleitung übertragenen Signale so auszugestalten, dass insbesondere die Information über die vorhandene Anschlussdämpfung bzw. gewählte Anschlussart und/oder Art des Mobiltelefons in den Signalen enthalten ist. Wird beispielsweise ein Mobiltelefon an die Antennenzuleitung angeschlossen (elektrisch oder über Antennenkoppler), kann automatisch die entsprechende Information über die Anschlussdämpfung über die Antennenzuleitung zu der Detektionseinrichtung übertragen werden.

Die Detektianseinrichtung ist vorzugsweise mit der Stelleinrichtung verbunden und/oder mit dieser kombiniert und ist ausgestaltet, die Stelleinrichtung entsprechend dem detektierten Einstellwert einzustellen. Es kommen verschiedene Möglichkeiten in Frage, wie die Information über den Einstellwert der Stelleinrichtung über die Antennenzuleitung übertragen wird. Insbesondere kann ein Frequenzsignal erzeugt werden (beispielsweise ein sinusförmiges Frequenzsignal mit einer vorzugsweise zeitlich konstanten Frequenz im Bereich von 20 bis 30 kH), welches den eigentlichen über die Antennenzuleitung zu übertragenen Signalen überlagert wird. Alternativ oder zusätzlich kann das überlagerte Signal durch Anlegen einer Gleichspannung an die Antennenzuleitung (insbesondere an den Zentralleiter eines Koaxialkabels gegenüber Masse) in die Antennenzuleitung eingekoppelt werden.

Allgemeiner formuliert ist vorzugsweise eine Signalerzeugungseinrichtung vorgesehen, die mit der Antennenzuleitung verbunden ist und die ausgestaltet ist, ein Signal zu erzeugen, das über die Antennenzuleitung zu der Detektionseinnchtung übertragen wird und eine Information darüber enthält, auf welchen Einstellwert die Stelleinrichtung einzustellen ist.

Die Signalerzeugungseinrichtung weist z.B. einen Frequenz-Generator auf, der ausgestaltet ist, ein Frequenzsignal zu erzeugen, das den über die Antennenzuleitung zu übertragenden Signalen überlagert wird.

Ferner gehört zum Umfang der Erfindung ein System mit einer Anordnung in einer der Ausgestaltungen, die in dieser Beschreibung beschrieben werden, und mit einer Mehrzahl der Signalerzeugungseinrichtungen, die jeweils ein Signal zur Einstellung der Stelleinrichtung auf einen der Signalerceugungseinrichtung zugeordneten Einstellwert erzeugen können, wobei eine oder mehrere der Signalerzeugungseinrichtungen in der Anordnung verbaut werden können und/oder eine oder mehrere der Signalerzeugungseinrichtungen, die in der Anordnung verbaut sind, aktiviert und deaktiviert werden können.

Das System ermöglicht es, Mobiltelefone unterschiedlicher Art und/oder auf unterschiedliche Weise an eine Anordnung mit einer Antennenzuleitung anzuschließen und jeweils dieselbe oder in einem definierten Pegelbereich liegende Gesamt-Verstärkung einzustellen. Dabei können in einem konkreten Exemplar der Anordnung mehrere der Signalerzeugungseinrichtungen vorgesehen sein, die beispielsweise jeweils entsprechend einer von mehreren Anschlusseinrichtungen zum Anschließen eines Teilnehmer-Endgerätes an die Anordnung ausgestaltet sind. Alternativ oder zusätzlich kann aus dem System zumindest eine Signalerzeugungseinrichtung ausgewählt werden und als Teil einer konkreten Anordnung vorgesehen werden. Insbesondere ist es somit möglich, verschiedene Exemplare der Anordnung unterschiedlich auszugestalten, indem unterschiedliche. Signalerzeugungseinrichtungen entsprechend der jeweils möglichen oder vorhandenen Anschlussarten für Teilnehmer-Endgeräte als Teil der Anordnung vorgesehen werden.

Außerdem gehört zum Umfang der Erfindung ein Verfahren zur Übertragung von Signalen über eine Antennenzuleitung in einer Mobilfunk-Teilnehmerstation, insbesondere in einem Fahrzeug, wie beispielsweise einem Straßen-Kraftfahrzeug, wobei eine Gesamt-Verstärkung der Signale, die zwischen einer Außenantenne der Mobilfunk-Telinehmerstation und einem Mobilfunk-Teilnehmergerät und/oder umgekehrt übertragen werden, automatisch abhängig von einer Anschlussdämpfung eingestellt wird, die ein Anschluss des Mobilfunk-Teilnehmergeräts an der Antennenzuleitung erzeugt.

In Bezug auf Vorteile und Varianten des Verfahrens wird auch auf die Beschreibung der verschiedenen Ausgestaltungen der erfindungsgemäßen Anordnung verwiesen. Ausgestaltungen des Verfahrens sind insbesondere auch Gegenstand der abhängigen Verfahrensansprüche.

Weitere Merkmale der Erfindung, die optional zusätzlich zu den bereits genannten Merkmalen vorhanden sein können, sowie Ausführungsbeispiele der Erfindung, werden nun unter Bezugnahme auf die beigefügte Zeichnung beschrieben. Die einzelnen Figuren der Zeichnung zeigen:
- Fig. 1: einen Teil einer ersten Ausführungsform einer Anordnung zur Übertragung von Signalen über eine Antennenzuleitung in einer Mobilfunk-Teilnehmerstation,
- Fig. 2: eine zweite Ausführungsform einer derartigen Anordnung,
- Fig. 3: eine dritte Ausführungsform einer derartigen Anordnung.
- Fig. 4: ein Detail einer Ausführungsform, die optional mit einer der in Fig. 1 bis 3 dargestellten Ausführungsform kombiniert werden kann, und
- Fig. 5: einen vertikalen Längsschnitt durch ein Gehäuse mit einem darin angeordneten Mobiltelefon.

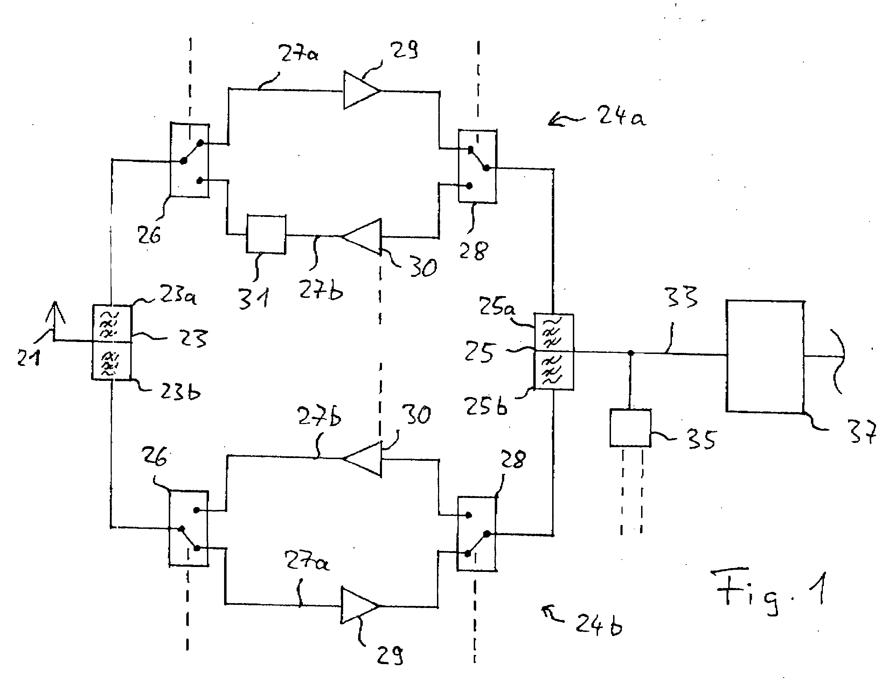

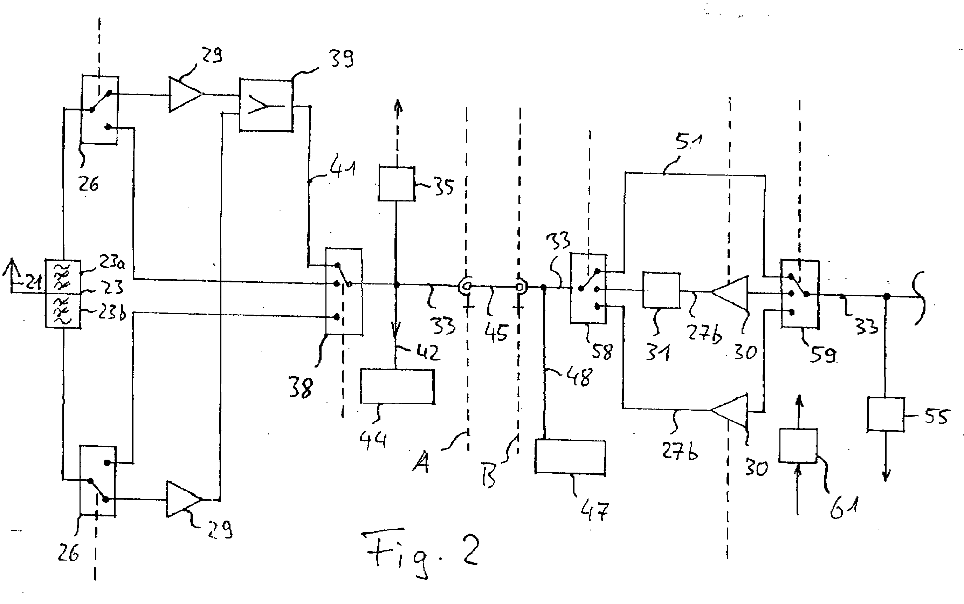

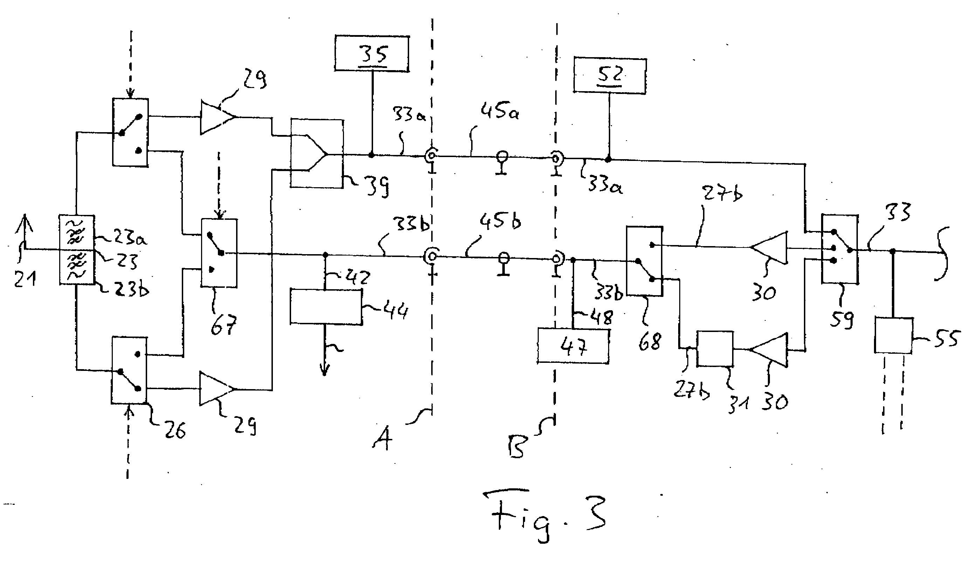

Fig. 1 zeigt das Schaltbild einer Anordnung, die z.B. in einem Straßen-Kraftfahrzeug integriert ist. Mit 21 ist eine Außenantenne der Mobilfunk-Teilnehmerstation bezeichnet. Unter einer Außenantenne wird eine Antenne zum Senden und/oder Empfangen von Funksignalen nach außerhalb bzw. von außerhalb der Teilnehmerstation verstanden, wobei die Funksignale innerhalb eines Mobilfunknetzes übertragen werden. Die Antenne 21 ist mit einem Diplexer 23 verbunden, der einen Hochpassfilter 23a und einen Tiefpassfilter 23b aufweist. Der Diplexer 23 dient dazu, die Anordnung zur Übertragung von Signalen in verschiedenen Frequenzbereichen betreiben zu können, z.B. sowohl im Frequenzbereich des Mobilfunkstandards GSM1800 als auch des Mobilfunkstandards GSM900. Statt des Diplexers kann auch eine Frequenzweiche für eine andere Anzahl von Frequenzbändern vorgesehen sein, so dass die Anordnung (dies gilt auch für die Anordnungen gemäß Fig. 2 und Fig. 3) z.B. auch für ein UMTS-Mobilfunknetz geeignet ist.

Die in Fig. 1 dargestellte Anordnung weist einen zweiten Diplexer 25 auf mit einem Hochpassfilter 25a und einem Tiefpassfilter 25b. Zwischen dem ersten Diplexer 23 und dem zweiten Diplexer 25 sind zwei Zweige 24a, 24b der Antennenzuleitung angeordnet, die jeweils an einem ihrer Enden mit dem Tiefpassfilter 23b und dem Tiefpassfilter 25b (im Fall des Zweiges 24b) bzw. mit dem Hochpassfilter 23a und dem Hochpassfilter 25a (im Fall des Zweiges 24a) verbunden sind. Die beiden Zweige 24a, 24b sind im Wesentlichen identisch aufgebaut, weshalb in Fig. 1 dieselben Bezugszeichen für Elemente der beiden Zweige 24a, 24b verwendet werden. Direkt über einen Abschnitt der Antennenzuleitung ist jeweils ein Schalter 26, 28 verbunden, der der Umschaltung des Signalweges auf jeweils einen von zwei Sub-Zweigen 27a, 27b dient. Bei dem Schalter kann es sich jeweils z.B. um einen SPDT-Analogschalter (Single-Pole/Double-Throw-Analogschalter) handeln. Wie jeweils durch eine gestrichelte Linie in Fig. 1 dargestellt ist, wird der Schaltzustand der Schalter 26, 28 über eine Signalleitung gesteuert.

In dem in Fig. 1 dargestellten Schaltzustand ist jeweils auf dem Sub-Zweig 27a umgeschaltet, der einen zweiten Signalverstärker 29 zur Verstärkung der Signale aufweist, die von der Antenne 21 empfangen wurden und über die Antennenzuleitung übertragen werden. Der zweite Verstärker 29 ist z.B. ein LNA (Low Noise Amplifer). Da es sich bei den über die Antenne 21 empfangenen Signalen unter Umständen um sehr schwache Signale, d.h. Signale mit hohem Rauschanteil, handeln kann, wird bevorzugt, dass der zweite Signalverstärker 29 über einen möglichst kurzen Weg der Antennenzuleitung mit der Antenne 21 verbunden ist. Besonders bevorzugt wird, dass der Diplexer 23 (oder eine andere Frequenzweiche), der Schalter 26 und zumindest außerdem der zweite Signalverstärker 29 im Antennenfuß der Antenne integriert sind. Unter einem Antennenfuß wird derjenige mechanische Teil einer Antennenanordnung verstanden, mit dem die Antenne mechanisch an der Mobilfunk-Teilnehmerstation befestigt ist.

Alternativ kann der genannte Teil der Anordnung auch außerhalb des Antennenfußes, jedoch in unmittelbarer Nähe des Antennenfußes angeordnet sein. Insbesondere beträgt die Länge des Weges der Antennenzuleitung von dem Antennenfuß bis zu dem zweiten Signalverstärker maximal 1,5 m, vorzugsweise maximal 30 cm.

In der in Fig. 1 dargestellten Ausführungsform befindet sich vorzugsweise der gesamte dargestellte Teil der Anordnung im Antennenfuß bzw. in der Nähe des Antennenfußes. Unter Bezugnahme auf Fig. 2 wird noch eine andere Anordnung beschrieben, die weniger Bauteile aufweist und daher noch leichter in den Antennenfuß integriert werden kann.

In der in Fig. 1 dargestellten Anordnung weist der zweite Sub-Zweig 27b einen ersten Signalverstärker 30 auf, der der Verstärkung von Signalen dient, die zu der Antenne 21 übertragen werden sollen und von der Antenne 21 in das Mobilfunknetz gesendet werden sollen. Bei dem ersten Signalverstärker handelt es sich insbesondere um einen Leistungsverstärker, mit dem die zu sendenden Signale ausreichend verstärkt werden können, um im Mobilfunknetz übertragen werden zu können.

Lediglich im ersten Zweig 24a ist in Serie zu dem ersten Signalverstärker 30 ein Oberwellenfilter 31 geschaltet, der eine Tiefpasswirkung hat.

Aus Sicht der Antenne 21 jenseits des Diplexers 25 setzt ein Teil der Antennenzuleitung an, über das alle über die Antennenzuleitung zwischen dem Teilnehmer-Endgerät und der Antenne 21 zu übertragenden Signale übertragen werden (gemeinsamer Weg 33). An den gemeinsamen Weg 33 ist ein Detektor 35 angeschlossen. Wie durch zwei gestrichelte Linien, die an dem Detektor 35 ansetzen, dargestellt ist, ist dieser über Signalleitungen mit den Schaltern 26, 28 verbunden, so dass abhängig von den Signalen auf dem gemeinsamen Weg 33 die Schalterstellungen der Schalter 26, 28 von dem Detektor 35 gesteuert werden können. Außerdem ist der Detektor 35 über die Signalleitungen mit den Leistungsverstärkern 30 verbunden. Er ist daher außerdem in der Lage, die Sendeleistung der Leistungsverstärker 30 zu steuern. Insbesondere kann der Detektor Steuersignale detektieren, die über den gemeinsamen Weg 33 übertragen werden, und abhängig davon die Schalter und/oder Verstärker steuern.

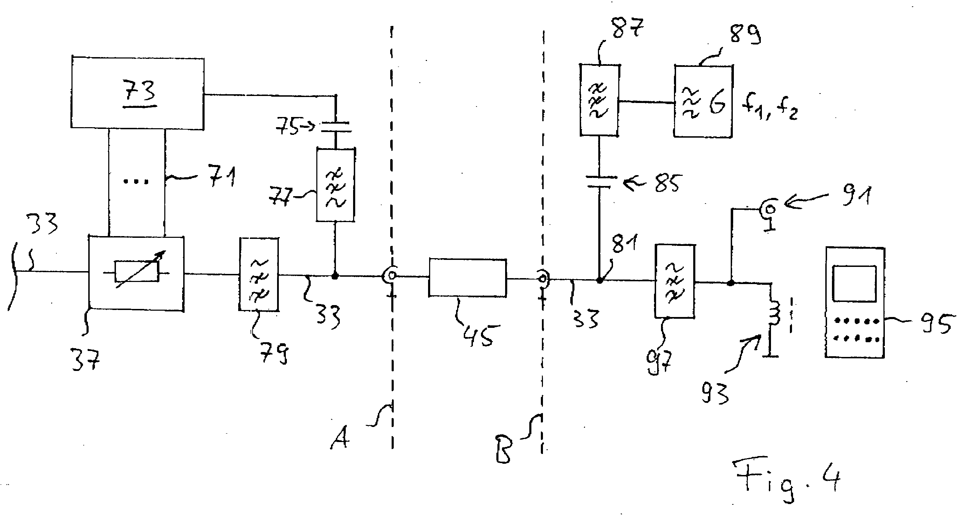

Auf dem gemeinsamen Weg 33 liegt außerdem ein digital einstellbares Dämpfungsglied 37, dessen Dämpfung durch eine Einrichtung eingestellt werden kann, die nicht in Fig. 1 dargestellt ist. Unter Bezugnahme auf Fig. 4 wird auf eine solche Einrichtung eingegangen.

Es wird nun die Ausführungsform gemäß Fig. 2 beschrieben. Dabei werden jedoch nur diejenigen Teile der Anordnung beschrieben, in denen sich die Anordnung von der in Fig. 1 dargestellten Anordnung unterscheidet. Gielche und funktionsgleiche Elemente und Einrichtungen sind mit denselben Bezugszeichen wie in Fig. 1 bezeichnet. Dies gilt auch für die noch zu beschreibende Fig, 3.

Ausgehend von der Antenne 21 erreichen die empfangenen Signale wiederum den Diplexer 23. Anstelle des zweiten Diplexers 25 ist jedoch ein Schalter 38 vorgesehen, der für die über die Antenne 21 zu sendenden Signale unmittelbar mit dem Schalter 26 verbunden ist. Bei dem Schalter 38 kann es sich beispielsweise um einen 3:1 Multiplexer handeln, insbesondere um einen Single-Pole/Triple-Throw Analogschalter (SP3T). Auf dem Weg der von der Antenne 21 empfangenen Signale von dem Schalter 26 in Richtung Teilnehmer-Endgerät befindet sich in der Anordnung für die Frequenzbänder jeweils ein zweiter Signalverstärker 29, dessen Ausgang mit einer Kombiniereinrichtung 39 verbunden ist, welche die Ausgangssignale der Verstärker 29 wieder auf einen gemeinsamen Weg 41 der empfangenen Signale kombiniert. Bei der Kombiniereinrichtung 39 kann es sich z.B. um einen Diplexer handeln. Ein Ausgang der Kombiniereinrichtung 39 ist über den gemeinsamen Weg 41 der Empfangssignale mit einem Anschluss des Schalters 38 verbunden.

An dem Schalter 38 setzt wiederum ein Teil des gemeinsamen Weges 33 aller über die Antennenzuleitung zu übertragender Signale an, mit dem wiederum der Detektor 35 zur Steuerung der Schalter 26, 38 verbunden ist. Jedoch steuert der Detektor 35 in diesem Fall nicht die Leistungsverstärker.

Außerdem ist an den gemeinsamen Weg 33 auch eine Leitung 42 angeschlossen, über die zur Stromversorgung insbesondere der Verstärker 29 elektrischer Strom aus dem gemeinsamen Weg 33 ausgekoppelt werden kann, d.h. abgezweigt werden kann. Die über diesen ausgekoppelten Strom elektrisch mit Energie zu versorgenden Einrichtungen sind schematisch durch den mit Bezugszeichen 44 bezeichneten Block dargestellt. Der Block 44 enthält auch weitere Elemente zur Stromversorgung.

Eine derartige Stromversorgung über den gemeinsamen Weg 33 kann auch bei anderen Ausführungsformen der Erfindung vorgesehen sein. Er ist insbesondere dann von Vorteil, wenn die mit Strom zu versorgenden Teile, Elemente und Einrichtungen in einem schwer zugänglichen Bereich angeordnet sind. Im Fall des Ausführungsbeispiels gemäß Fig. 2 sind alle Elemente und Einrichtungen links von der mit A bezeichneten vertikalen gestrichelten Linie Teil einer Antennenanordnung, wobei (mit Ausnahme der Antenne 21 selbst) alle anderen Elemente und Einrichtungen insbesondere in den Antennenfuß integriert sein können. Da dieser Teil der Gesamt-Anordnung nicht wie in Fig. 1 auch die Leistungsverstärker enthält, gelingt die Integration in den Antennenfuß und/oder anderswo in miniaturisierter Form umso leichter.

In Fig. 2 ist ferner ein Koaxialkabel 45 dargestellt, das in der Praxis im Vergleich zu den anderen dargestellten Leitungswegen sehr viel länger ausgeführt werden kann und z.B. die Antennenanordnung am Heck eines Straßen-Kraftfahrzeuges (z. B. Personenkraftwagen) mit dem Rest der Anordnung im mittleren oder vorderen Bereich des Fahrzeuges verbindet. Dieser Rest ist teilweise in Fig. 2 rechts von der mit dem Bezugszeichen B bezeichneten vertikalen gestrichelten Linie dargestellt. Der Teil weist eine Einrichtung 47 auf, die über eine Leitung 48 an den gemeinsamen Weg 33 angeschlossen ist und der Einkopplung von elektrischem Strom dient, der über die Leitung 42 ausgekoppelt wird. Der gemeinsame Weg 33 ist mit einem zweiten 3-Wege-Schalter 58 verbunden. Es kann sich dabei wiederum um einen 3:1 Multiplexer, insbesondere einen SP3T, handeln. Einer der drei Anschlüsse des Schalters 58, auf den der Signalfluss des gemeinsamen Wegs 33 umgeschaltet werden kann, ist über eine durchgehende Leitungsverbindung 51 mit einem entsprechenden Anschluss eines weiteren Schalters 59 verbunden, der wiederum ein 3:1 Multiplexer, z.B. ein SP3T, sein kann. Diese Leitungsverbindung 51 dient der Übertragung von Steuersignalen über den gemeinsamen Weg 33 im Bereich B, das Koaxialkabel 45 und den anderen Teil des gemeinsamen Weges 33 in der Antennenanordnung (Bereich A). Insbesondere können diese Steuersignale von dem Detektor 35 zur Steuerung der Schalter 26, 38 und/oder der Verstärkerleistung der Verstärker 29 verwendet werden.

Zwischen den Schaltern 58, 59 sind außerdem die Sub-Zweige 27b angeordnet, die den Sub-Zweigen 27b gemäß Fig. 1 entsprechen und die Leistungsverstärker 30 aufweisen. Aus Sicht der Sub-Zweige 27b jenseits des Schalters 59 befindet sich ein weiterer Abschnitt des gemeinsamen Weges 33, an den ein weiterer Detektor 55 zur Steuerung der Schaltzustände der Schalter 58, 59 und der Verstärkerleistung der Leistungsverstärker 30 angeschlossen ist. Außerdem ist an diesen Teil des gemeinsamen Weges 33 der noch verbleibende Teil der Gesamt-Anordnung angeschlossen, der nicht in Fig. 2 dargestellt ist. Dieser verbleibende Teil weist beispielsweise (mit Ausnahme des dort dargestellten Koaxialkabels) Elemente und Einrichtungen auf, die noch anhand von Fig. 4 beschrieben werden. Dazu gehören insbesondere das einstellbare Dämpfungsglied 37 mit der zugehörigen Stelleinrichtung, eine Anschlusseinrichtung zum Anschließen der Anordnung an ein Teilnehmer-Endgerät, die Signalerzeugung zur Übertragung der Stellsignale für die Stelleinrichtung über die Antennenzuleitung und die Signalerkennung.

In Fig. 2 ist außerdem eine Einrichtung 61 zur Stromversorgung dargestellt, die beispielsweise in einem Straßenkraftfahrzeug das Bordnetz zur Versorgung von Verbrauchern mit elektrischer Energie symbolisiert. Die Einrichtung 61 ist mit der Einrichtung 47 zur Einkopplung des Stroms in den gemeinsamen Weg 33 verbunden.

Fig. 3 zeigt eine Modifikation der Anordnung gemäß Fig. 2, wobei der wesentliche Unterschied darin besteht, dass anstelle des einen Koaxialkabels 45 zur Übertragung sowohl der Sendesignale (d.h. zum Senden von der Antenne 21 ins Mobilfunknetz) als auch der Empfangssignale (d.h. der Signale, die von der Antenne 21 empfangen wurden) zwei Koaxialkabel (oder andere Leitungsverbindungen) 45a, 45b vorgesehen sind, zur getrennten Übertragung der Signale in Senderichtung und Empfangsrichtung. Anstelle des Schalters 38 in Fig. 2 ist ein Schalter 67 in der Antennenanordnung vorgesehen, der ein 2:1 Multiplexer, insbesondere ein SPDT sein kann. Der an diesen Schalter 67 angeschlossene gemeinsame Weg 33b für die Sendesignale führt über das Koaxialkabel 45b zu einem Schalter 68 in dem entfernten Teil der Anordnung (in Bereich B). An diesem Schalter 68 spaltet sich der Signalweg wieder in die Sub-Zweige 27b auf, die an einem werteren Schalter 59 wieder zu einem gemeinsamen Weg 33 für alle Signale der Antennenzuleitung zusammengeführt werden. Der Signalweg für die Sendesignale wurde entgegen der Signalflussrichtung beschrieben.

Da die Empfangssignale nicht wie in Fig. 2 an einem 3-Wege-Schalter wieder mit den Empfangssignalen zusammengeführt werden, ist der Ausgang der Kombiniereinrichtung 39 über einen gemeinsamen Weg 33a, der ein gemeinsamer Weg lediglich für die Empfangssignale ist, und über ein Koaxialkabel 45a mit dem entfernten Teil der Anordnung verbunden. Dort endet der gemeinsame Weg 33a an dem Schalter 59 und geht wieder in den gemeinsamen Weg 33 aller Signale über.

Eine Einrichtung 52 zur Einkopplung von Steuersignalen im entfernten Teil der Anordnung auf den gemeinsamen Weg 33a ist rechts oben in Fig. 3 dargestellt. Die so eingekoppelten Steuersignale können von dem Detektor 35 der Antennenanordnung aus dem gemeinsamen Weg 33a ausgekoppelt werden.

Der nun anhand von Fig. 4 beschriebene Teil der Anordnung kann ohne Modifikation mit dem in Fig. 1 beschriebenen Teil der Anordnung kombiniert werden, wobei das digitale einstellbare Dämpfungsglied 37 sowohl in Fig. 1 als auch in Fig. 4 dargestellt ist. Der in Fig, 1 mit Ausnahme des Dämpfungsgliedes 37 dargestellte Teil der Anordnung setzt in Fig. 4 links an dem gemeinsamen Weg 33 an.

Das Dämpfungsglied 37 ist über eine Steuersignalleitung 71, die z.B. digitale Signale mit einer Auflösung von 5 Bit übertragen kann, mit einer Detektionseinrichtung 73 verbunden. Dabei ist die Detektionseinrichtung 73 ausgestaltet, über die Steuersignalleitung 71 Steuersignale zur Einstellung des Dämpfungsgrades der Dämpfungseinrichtung 37 zu senden. Die Detektionseinrichtung 73 weist z.B. einen ROM (Read Only Memory) auf. Ein Eingang der Detektionseinrichtung 73 ist über eine Serienschaltung aus einer Gleichstrom-Sperreinrichtung 75 (mit z.B. einem Kondensator) und einem Tiefpassfilter 77 mit dem gemeinsamen Weg 33 der Antennenzuleitung verbunden. Bei einer Variante dieses Teils der Anordnung, der mit der Anordnung gemäß Fig. 3 verbunden werden kann, kann es sich statt um den gemeinsamen Weg 33 für alle Signale auch um den gemeinsamen Weg 33a für die Empfangssignale und/oder um den gemeinsamen Weg 33b für alle Sendesignale handeln.

In der speziellen Ausgestaltung gemäß Fig. 4, bei der die Detektionseinrichtung über Frequenzsignale angesteuert wird, ist außerdem auf dem gemeinsamen Weg 33, und zwar in einem Abschnitt zwischen dem Teilnehmer-Endgerät und der Dämpfungseinrichtung 37, zwischen dem Anschlusspunkt der Serienschaltung 75, 77 und der Dämpfungseinrichtung 37 ein Hochpass 79 angeordnet. Auf diese Weise kann die Detektionseinrichtung 73 über Frequenzsignale angesteuert werden, die im Vergleich zu den eigentlichen zu übertragenden Signalen niederfrequent sind. Insbesondere kann abhängig von der Frequenz dieser niederfrequenten Signale die Detektionseinrichtung 73 den entsprechenden Dämpfungsgrad der Dämpfungseinrichtung 37 einstellen. In dem ROM ist hierzu beispielsweise abgelegt, welche niederfrequente Frequenz welchem Bitwert entspricht, der über die Signalleitung 71 übertragen werden soll.

In dem Ausführungsbeispiel gemäß Fig. 4 sind das Dämpfungsglied und die bisher beschriebenen Teile der Anordnung (links von der vertikalen mit A bezeichneten gestrichelten Linie) Teil der Antennenanordnung. Dieser Teil ist über ein Koaxialkabel 45 mit dem (aus Sicht der Antenne) entfernten Teil der Anordnung verbunden. Dort ist der gemeinsame Weg 33 über einen Anschlusspunkt 81 mit einer zweiten Serienschaltung aus einer Gleichstrom-Sperreinrichtung 85 und einem Tiefpassfilter 87 mit einem Frequenzgenerator, 89 verbunden, In Fig. 4 ist durch die Symbole f₁, f₂ angedeutet, dass der Frequenzgenerator 89 Signale unterschiedlicher Frequenz erzeugen kann, Dabei erzeugt der Frequenzgenerator 89 zu einem gegebenen Zeitpunkt vorzugsweise immer nur ein Frequenzsignal und ist die Frequenz dieses Signals konstant im Laufe der Zeit und ändert sich nur dann, wenn sich die Anschlussdämpfung geändert hat. Dies ist beispielsweise dann der Fall, wenn ein Mobiltelefon auf andere Art an die Antennenzuleitung angeschlossen wird und/oder ein anderes Mobiltelefon an die Antennenzuleitung angeschlossen wird.

Statt eines einzigen Frequenzgenerators 89 können auch mehrere Frequenzgeneratoren vorgesehen sein oder wahlweise Teil der Anordnung sein. Beispielsweise ist jeder der Frequenzgeneratoren auf eine feste Frequenz eingestellt. Der jeweils für eine bestimmte Anschlussdämpfung vorgesehene oder zur Auswahl stehende Frequenzgenerator wird erst dann aktiviert oder an die Anordnung angeschlossen, wenn ein Teilnehmer-Endgerät mit dieser Anschlussdämpfung an die Antennenzuleitung angeschlossen wird. Z.B. kann ein Kraftfahrzeug einen elektrischen Anschluss aufweisen, über den Antennensignale eines Mobiltelefons unmittelbar und im Wesentlichen ohne Dämpfungsverluste eingekoppelt werden können bzw. ausgekoppelt werden können. Außerdem kann das Fahrzeug ein Gehäuse aufweisen, in das ein Endgerät eingebracht werden kann und über einen in dem Gehäuse angeordneten Antennenkoppler drahtlos mit der Antennenzuleitung verbunden werden kann. In diesem Fall kann sowohl für den elektrischen Anschluss als auch für das Gehäuse jeweils ein Frequenzgenerator vorgesehen sein, der bei Anschluss des Endgeräts vorzugsweise automatisch aktiviert wird.

In dem konkreten Ausführungsbeispiel gemäß Fig. 4 ist der elektrische Anschluss mit dem Bezugszeichen 91 bezeichnet und ist der Antennenkoppler mit dem Bezugszeichen 93 bezeichnet. Das Endgerät, hier ein Mobiltelefon, ist mit Bezugszeichen 95 bezeichnet. Zwischen dem Kontaktpunkt 81 für den Zweig des Frequenzgenerators und dem Anschluss für das Endgerät ist ein zweiter Hochpass 97 angeordnet.

Die Erfindung ist jedoch nicht auf diese Kombination von Anschlussarten beschränkt. Auch kann statt des Frequenzgenerators 89 eine andere Signalerzeugungseinrichtung vorgesehen sein, die beispielsweise ein Gleichspannungssignal erzeugt.

Außerdem kann derjenige Teil der Anordnung, der der Verstärkung der Sendersignale dient, in das elektromagnetische abschirmende Gehäuse integriert sein. Hierzu gehört insbesondere der Leistungsverstärker oder gehören die Leistungsverstärker für verschiedene Frequenzbänder. In der Ausgestaltung gemäß Fig. 2 oder Fig. 3 können dazu auch die Schalter 58 und 59 bzw. 68 und 59 gehören.

Anders als in Fig. 1 bis Fig. 3 dargestellt ist, können die Verstärker für die Sendesignale oder für die Empfangssignale auch durch einen einzigen Verstärker ersetzt werden, der die Verstärkung für verschiedene Frequenzbänder übernimmt. Dabei kann der Verstärker auf das verwendete Frequenzband einstellbar sein.

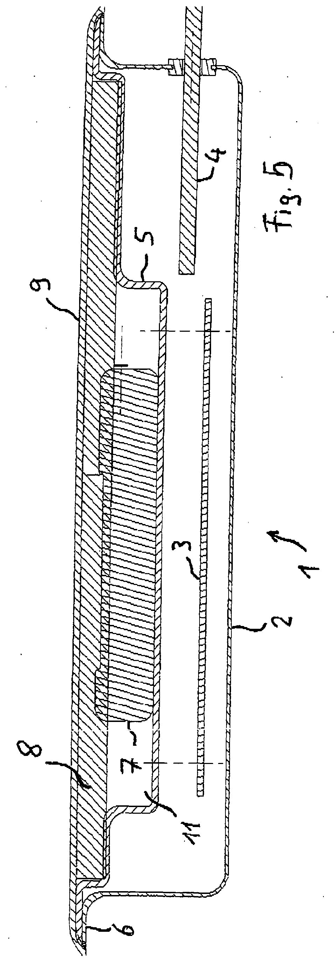

Wie in der Fig. 5 gezeigt, kann bei einer Ausgestaltung der erfindungsgemäßen Anordnung ein Gehäuse 1 vorgesehen sein, das ein Unterteil 2 und einen Deckel 9 aufweist. Das Unterteil 2 umgibt einen Innenraum des Gehäuses 1 an allen Seiten mit Ausnahme der oberen Seite. Das Unterteil 2 ist im Wesentlichen quaderförmig ausgestaltet, weist jedoch abgerundete Ecken auf und bildet einen oberen Rand 6 zur Auflage eines wannenförmigen Einsatzteils 5. Das Unterteil 2 ist z. B. aus Metall gefertigt (und kann optional mit Massepotenzial des Kraftfahrzeugs verbunden werden), so dass es elektromagnetische Wellen, die durch das Unterteil 2 hindurchtreten, dämpft und/oder so dass elektromagnetische Wellen durch das Unterteil 2 nicht hindurch treten können. In beiden Fällen wird eine Abschirmwirkung erzielt.

Der wannenförmige Einsatz 5 definiert im Innern des Gehäuses 1 einen Teil-Innenraum 11, der groß genug ist, um jeweils ein Mobiltelefon darin anzuordnen, wobei das Mobiltelefon aus einer großen Anzahl von unterschiedlichen Typen ausgewählt werden kann, wobei die Außenabmessungen der Mobiltelefone in einem weiten Bereich variieren können. Insbesondere die sich in Fig. 1 von rechts nach links erstreckende Länge des dort abgebildeten Mobiltelefons 7 füllt den Teil-Innenraum 11 nicht aus. Insbesondere wäre noch Platz für eine oben (d. h. in der Fig. 5 nach rechts weisend) an dem Mobiltelefon 7 oder einem anderen Mobiltelefon herausragenden Antenne.

Der Einsatz 5 bildet eine Schulter, d. h. einen seitlich des Teil-Innenraums 11 gelegenen Bereich, in dem er sich oberhalb des Niveaus der Auflagefläche für das Mobiltelefon 7 in etwa horizontaler Richtung erstreckt. Von diesem Niveau aus erhebt sich das Material des Einsatzes 5 dann auf das Niveau des Randes 6 des Unterteils 2. Auf dem genannten Zwischenniveau ist in dem in Fig. 5 dargestellten geschlossenen Zustand des Gehäuses 1 eine Schaumstoffplatte 8 aufgelegt, die an der Unterseite des Deckels 9 befestigt sein kann. Die Höhe bzw. Dicke der Schaumstoffplatte 8 ist so bemessen, dass sie von der unteren Oberfläche des Deckels 9 bis auf das Zwischenniveau reicht und dort auf der Schulter des Einsatzes 5 aufliegt. Ferner ist die Höhe des Einsatzes 5 in dem Bereich des Teil-Innenraums 11, in dem das Mobiltelefon 7 oder andere Mobiltelefone angeordnet werden können, so bemessen, dass die Dicke bei Mobiltelefonen mit einer Dicke im üblichen Bereich (die Dicke ist die Dimension, die in Fig. 5 sich in vertikaler Richtung erstreckt) größer ist als die Höhe zwischen der Auflagefläche für das Mobiltelefon 7 bis zur Oberkante der Schulter. Auf diese Weise ragt das Mobiltelefon über das Niveau der Schulter hinaus und drückt daher die Schaumstoffplatte 8 bei geschlossenem Deckel 9 auf das Mobiltelefon, wie aus Fig. 1 und Fig. 2 erkennbar ist. Daher wird der Schaumstoff der Schaumstoffplatte 8 zusammengedrückt (nicht in Fig. 1 und Fig. 2 dargestellt) und übt aufgrund der resultierenden elastischen Verformung eine Anpresskraft auf das Mobiltelefon 7 aus, die das Mobiltelefon zusätzlich zu seiner Gewichtskraft auf die Auflagefläche des Einsatzes 5 drückt.

Die Schaumstoffplatte 8 ist aus einem Material hergestellt, das bei hindurch tretenden elektromagnetischen Wellen, insbesondere in den von Mobiltelefonen benutzten Frequenzbereichen, hohe dielektrische Verluste bewirkt, so dass die Wellen gedämpft werden und eine Abschirmwirkung erzielt wird. Z. B. ist in dem Schaumstoffmaterial Kohlenstoff verteilt, der zumindest den wesentlichen Anteil der dielektrischen Verluste bewirkt. Bei dem Schaumstoffmaterial kann es sich zum Beispiel um Polyurethanschaumstoff handeln.

Geeignete Schaumstoffe mit elektromagnetischer Abschirmwirkung werden z. B. von der Emc-Technik und Consulting GmbH, Emilienstraße 35, 70563 Stuttgart vertrieben. Für das Ausführungsbeispiel gemäß Fig. 5 kann beispielsweise der von der Emc GmbH angebotene homogene Dämpfungs-Schaumstoff mit der Bezeichnung C-RAM MT eingesetzt werden.

In dem Zwischenraum zwischen dem Boden des Unterteils 2 und dem Teil-Innenraum 11 (Wanne), in dem das Mobiltelefon 7 angeordnet ist, ist eine Platine 3 angeordnet. Elektrische Bauteile und Schaltungselemente sowie weitere Einrichtungen können an der Platine 3 ausgebildet sein. Anstelle einer Platine kann ferner ein anderer Körper vorgesehen sein, der solche Einrichtungen trägt, Diese Einrichtungen können insbesondere Funktionen ausüben, die für den Betrieb des Mobiltelefons 7 oder eines anderen Mobiltelefons in dem Gehäuse 1 oder in einem anderen Gehäuse dienen. Insbesondere können die Einrichtungen an der Platine 3 oder dem anderen Körper als Antennenstruktur ausgebildet sein, so dass zwischen der Antennenstruktur und der Antenne des Mobiltelefons Funksignale übertragen werden können. Die Antennenstruktur ist wiederum über eine Durchführung 4 durch das Gehäuse mit der Antennenzuleitung der Fahrzeugantenne verbunden. Weitere Einrichtungen wie beispielsweise ein erster Signalverstärker, und/oder eine zweite Antennenstruktur für eine Bluetooth-Schnittstelle zwischen dem Mobiltelefon und den Einrichtungen an der Platine 3 oder dem sonstigen Körper können ebenfalls vorgesehen sein. Z. B. über die Bluetooth-Schnittstelle kann das Mobiltelefon daher in an sich bekannter Weise an eine Freisprecheinrichtung des Kraftfahrzeugs mit zumindest einem Lautsprecher und mit zumindest einem Mikrofon verbunden sein. Eine geeignete Anordnung zur Signalverstärkung ist z. B. in DE 10114531 beschrieben.

## Patentansprüche

1. Anordnung zur Übertragung von Signalen über eine Antennenzuleitung in einer Mobilfunk-Teilnehmerstation, insbesondere in einem Fahrzeug, wie beispielsweise einem Straßen-Kraftfahrzeug, wobei die Anordnung folgendes aufweist:
- die Antennenzuleitung,
- einen Signalverstärker (29, 30) zur Verstärkung der Signale.

2. Anordnung nach dem vorhergehenden Anspruch, wobei die Anordnung eine Stelleinrichtung (37, 73) zur Einstellung einer Gesamt-Verstärkung der Signale aufweist, die zwischen einer Außenantenne der Mobilfunk-Teilnehmerstation und einem Mobilfunk-Teilnehmergerät und/oder umgekehrt übertragen werden, wobei die Stelleinrichtung (37, 73) ausgestaltet ist, die Gesamt-Verstärkung abhängig von einer Anschlussdämpfung einzustellen, die ein Anschluss des Mobilfunk-Teilnehmergeräts an der Antennenzuleitung erzeugt.

3. Anordnung nach dem vorhergehenden Anspruch, wobei die Stelleinrichtung (37, 73) eine einstellbare Dämpfungseinrichtung (37) aufweist, die derart mit der Antennenzuleitung gekoppelt ist, dass über die Antennenzuleitung übertragene Signale entsprechend einer eingestellten Dämpfung gedämpft werden.

4. Anordnung nach einem der beiden vorhergehenden Ansprüche, wobei die Anordnung eine Detektionseinrichtung (73) aufweist, die mit der Antennenzuleitung verbunden ist und die ausgestaltet ist, über die Antennenzuleitung übertragene Signale auszuwerten und einen Einstellwert zu detektieren, auf welchen die Stelleinrichtung (37, 73) einzustellen ist.

5. Anordnung nach dem vorhergehenden Anspruch, wobei die Detektionseinrichtung (73) mit der Stelleinrichtung (37, 73) verbunden und/oder kombiniert ist und ausgestaltet ist, die Stelleinrichtung (37, 73) entsprechend dem detektierten Einstellwert einzustellen.

6. Anordnung nach einem der beiden vorhergehenden Ansprüche, mit zumindest einer Signalerzeugungseinrichtung, die mit der Antennenzuleitung verbunden ist und die ausgestaltet ist, ein Signal zu erzeugen, das über die Antennenzuleitung zu der Detektionseinrichtung (73) übertragen wird und eine Information darüber enthält, aufweichen Einstellwert die Stelleinrichtung (37, 73) einzustellen ist.

7. Anordnung nach dem vorhergehenden Anspruch, wobei die Signalerzeugungseinrichtung einen Frequenz-Generator (89) aufweist, der ausgestaltet ist, ein Frequenzsignal zu erzeugen, das den über die Antennenzuleitung zu übertragenden Signalen überlagert wird.

8. System mit einer Anordnung nach einem der beiden vorhergehenden Ansprüche und mit einer Mehrzahl der Signalerzeugungseinrichtungen, die jeweils ein Signal zur Einstellung der Stelleinrichtung auf einen der Signalerzeugungseinrichtung zugeordneten Einstellwert erzeugen können, wobei eine oder mehrere der Signalerzeugungseinrichtungen in der Anordnung verbaut werden können und/oder eine oder mehrere der Signalerzeugungseinrichtungen, die in der Anordnung verbaut sind, aktiviert und deaktiviert werden können.

9. Anordnung nach einem der vorhergehenden Ansprüche, wobei die Antennenzuleitung an einen Antennenkoppler (93) angeschlossen ist, der innerhalb eines elektromagnetisch abschirmenden Gehäuses zur Aufnahme eines Mobiltelefons angeordnet ist und der ausgestaltet ist, Signale der Antennenzuleitung drahtlos zu einer Antenne des Mobiltelefons (95) zu übertragen und/oder von einer Antenne des Mobiltelefons (95) gesendete Signale zu empfangen.

10. Verfahren zur Übertragung von Signalen über eine Antennenzuleitung in einer Mobilfunk-Teilnehmerstation, insbesondere in einem Fahrzeug, wie beispielsweise einem Straßen-Kraftfahrzeug, wobei eine Gesamt-Verstärkung der Signale, die zwischen einer Außenantenne der Mobilfunk-Teilnehmerstation und einem Mobilfunk-Teilnehmergerät und/oder umgekehrt übertragen werden, automatisch abhängig von einer Anschlussdämpfung eingestellt wird, die ein Anschluss des Mobilfunk-Teilnehmergeräts an der Antennenzuleitung erzeugt.

11. Verfahren nach dem vorhergehenden Anspruch, wobei zur Einstellung der Gesamt-Verstärkung ein Dämpfungswert einer einstellbaren Dämpfungseinrichtung (37) eingestellt wird.

12. Verfahren nach einem der beiden vorhergehenden Ansprüche, wobei eine Information darüber, auf welchen Einstellwert eine Stelleinrichtung (37, 73) zur Einstellung der Gesamt-Verstärkung einzustellen ist, über die Antennenzuleitung oder über ein Teil der Antennenzuleitung übertragen wird.

13. Verfahren nach dem vorhergehenden Anspruch, wobei ein Signal zu übertragenden der Information ein Frequenzsignal ist, das den über die Antennenzuleitung zu übertragenden Signalen überlagert wird.

14. Verfahren nach einem der beiden vorhergehenden Ansprüche, wobei die Gesamt-Verstärkung abhängig von der Art eingestellt wird, wie das oder die Mobilfunk-Teilnehmergeräte an die Antennenzuleitung angeschlossen sind und/oder ob das oder die Mobilfunk-Teilnehmergeräte aktiviert sind.
